# EUROPÄISCHE PATENTANMELDUNG

(11) **EP 1 616 733 A1**
(43) Veröffentlichungstag der Anmeldung: **18.01.2006**
(21) Anmeldenummer: 05014483.1
(22) Anmeldetag: 04.07.2005
(51) Int. Cl.: B60H 1/00

(54) **Klimatisierungseinrichtung für Fahrzeuge und Verfahren für deren Steuerung**

(30) Priorität: 13.07.2004 DE 102004034055
(71) Anmelder: Behr GmbH & Co. KG, 70469 Stuttgart (DE)
(72) Erfinder: Baruschke, Wilhelm, 73117 Wangen (DE); Lochmahr, Karl, 71665 Vaihingen (DE)

(57) **Zusammenfassung**

Die vorliegende Erfindung betrifft eine Klimatisierungseinrichtung für Fahrzeuge bzw. ein Verfahren zum Steuern des Betriebs einer Klimatisierungseinrichtung für Kraftfahrzeuge.

Eine Klimatisierungseinrichtung für Fahrzeuge weist einen Zufuhrkanal (11) für Luft auf, in dem ein Gebläse (12) angeordnet ist, welches einen zu einem Verdampfer (13) führenden Luftstrom erzeugt. Stromabwärts des Verdampfers ist ein Heizungswärmetauscher (17) angeordnet. Gemäß der Erfindung ist vorgesehen, dass an dem Verdampfer ein Nebenstromkanal (14) vorbeiführt. Der Nebenstromkanal ermöglicht es, eine Luftströmung zu erzeugen, die am Verdampfer vorbei direkt in den Bereich des Strömungskanals stromabwärts des Verdampfers und stromaufwärts des Heizungswärmetauschers führt.

## Beschreibung

Die vorliegende Erfindung betrifft eine Klimatisierungseinrichtung für Fahrzeuge bzw. ein Verfahren zum Steuern des Betriebs einer Klimatisierungseinrichtung für Kraftfahrzeuge.

Es sind Klimatisierungseinrichtungen und Verfahren zum Klimatisieren von Fahrzeugen bekannt, bei denen der Verdampfer und der Klimakompressor der Klimaanlage derart betrieben werden, dass die Verdampfertemperatur innerhalb eines Bereiches von typischerweise ca. 2°C bis ca. 12°C liegt. Die Regelung der Temperatur im Bereich des Verdampfers erfolgt dabei so, dass eine geeignete Konditionierung der Luft der Klimaanlage erfolgt, so dass die Temperierung des Innenraums und die Beschlagfreiheit der Scheiben des Fahrzeuges sichergestellt sind.

Um den Kraftstoffverbrauch des Fahrzeugs zum Betreiben der Klimaanlage möglichst gering zu halten, ist es wünschenswert, die Temperatur im Verdampfer möglichst hoch zu gestalten, da in diesem Fall die benötigte Energie zum Antreiben des Kompressors der Klimaanlage, welche letztlich durch die Brennkraftmaschine des Fahrzeugs erzeugt wird, die geringste ist. Je mehr Leistung im Verdampfer benötigt wird, desto größer ist die erforderliche Energiemenge zum Betreiben der Klimaanlage. Eine weitere Erhöhung der Verdampfertemperatur, beispielsweise in Fällen, in denen die Außentemperatur noch unter der gewünschten Innenraumtemperatur, aber oberhalb des Verdampfergrenzwertes liegt, kommt aus Gründen der Geruchs- und Feuchtigkeitsbildung nicht in Betracht, so dass ein gewisser Grundverbrauch an Energie für den Kompressor der Klimaanlage hierdurch bedingt ist.

Aufgabe der Erfindung ist es, eine weitere Reduktion des Grundverbrauchs, welcher durch die Klimaanlage bedingt ist, zu ermöglichen.

Diese Aufgabe wird durch eine Klimatisierungseinrichtung für Fahrzeuge gemäß der Erfindung ermöglicht, wobei erfindungsgemäße Verfahren geeignet sind, diesen Minderverbrauch zu realisieren.

Eine Klimatisierungseinrichtung für Fahrzeuge weist einen Zufuhrkanal für Luft auf, in dem ein Gebläse angeordnet ist, welches einen zu einem Verdampfer führenden Luftstrom erzeugt. Stromabwärts des Verdampfers ist ein Heizungswärmetauscher angeordnet. Gemäß der Erfindung ist vorgesehen, dass an dem Verdampfer ein Nebenstromkanal vorbeiführt. Der Nebenstromkanal ermöglicht es, eine Luftströmung zu erzeugen, die am Verdampfer vorbei direkt in den Bereich des Strömungskanals stromabwärts des Verdampfers und stromaufwärts des Heizungswärmetauschers führt. Dieser Strömungskanal ermöglicht es, einen Teilstrom der zugeführten Luft am Verdampfer vorbeizuführen und somit den Luftmassenstrom durch den Verdampfer zu verringern. Durch Reduktion des Luftmassenstroms über den Verdampfer wird die Leistungsaufnahme der Klimaanlage, d.h. des Klimakompressors, reduziert. Durch Verringern des Luftmassenstroms über den Verdampfer bei Aufrechterhalten der Verdampfertemperatur unterhalb des Verdampfertemperaturgrenzwerts wird gleichzeitig eine unangenehme Geruchsbildung im Bereich des Verdampfers vermieden. Es ist also weiterhin möglich, den Verdampfer so zu betreiben, dass die Temperatur im Bereich des Verdampfers in keiner Betriebssituation einen vorgegebenen Verdampfertemperaturgrenzwert übersteigt. Insgesamt gesehen ist jedoch die Energiemenge zum Aufrechterhalten dieser Verdampfertemperatur geringer, da der Luftmassenstrom wärmerer Luft durch den Verdampfer reduziert wird, so dass die Antriebsleistung des Kompressor der Klimaanlage und somit auch des Fahrzeugs geringer gehalten wird.

Gemäß bevorzugter weiterführender Ausgestaltung der Erfindung ist vorgesehen, dass der Nebenstromkanal derart schaltbar ausgebildet ist, dass ein ausbildender Teilstrom durch den Nebenstromkanal bestimmbar ist. Gemäß dieser Ausgestaltung wird das Verhältnis des Teilstroms durch den Nebenstromkanal in Bezug auf den gesamten Volumenstrom über den Bereich des Verdampfers hinweg regelbar oder steuerbar. Durch diese Maßnahme wird erreicht, dass in Abhängigkeit der Temperatur der zugeführten Luft und der Verdampferleistung die zu erreichenden Temperatur stromaufwärts des Verdampfers steuer- und regelbar ist. Es stellt eine bevorzugte Ausführungsform dar, wenn zum Bestimmen des Teilstroms über den Nebenstromkanal eine Klappe vorgesehen ist, welche insbesondere durch einen von einer Steuereinrichtung ansteuerbaren Stellantrieb verstellbar ist. Über die Steuereinrichtung und den Stellantrieb können über Klappenbetätigungen somit die Mischverhältnisse aus Teilstrom und Verdampferstrom bestimmt werden. Dabei ist die Klappe insbesondere dazu geeignet, den Nebenstromkanal vollständig abzuschließen. Vollständiges Abschließen des Nebenstromkanals ist insbesondere dann günstig, wenn die Außentemperatur größer ist als die zu erzeugende Innenraumtemperatur. In diesem Fall ist ein Nebenstrom vorbei am Verdampfer unerwünscht, da er die Temperatur stromabwärts des Verdampfers erhöhen und somit die Effizienz des Systems vermindern würde.

Zur Lösung der der Erfindung zu Grunde liegenden Aufgabe wird der Betrieb einer Klimatisierungseinrichtung so durchgeführt, dass die Temperatur im Bereich des Verdampfers derart geregelt ist, dass ein Verdampfergrenzwert in diesem Bereich nicht überschritten wird. Gemäß der Erfindung ist ein Nebenstromkanal vorgesehen, der an dem Verdampfer vorbeiführt, wobei der Teilstrom durch den Nebenstromkanal derart gesteuert ist, dass die Temperatur stromabwärts des Verdampfers einen Wert oberhalb des Verdampfergrenzwerts einnimmt.

Durch das erfindungsgemäße Verfahren wird es ermöglicht, stromabwärts des Verdampfers Temperaturen oberhalb des Verdampfergrenzwerts bereitzustellen, wobei zugleich innerhalb des Verdampfers der Temperaturgrenzwert nicht überschritten wird. Durch diese Vorgehensweise kann in all den Fällen, in denen die Außentemperatur geringer ist als die gewünschte Innenraumtemperatur aber höher als die Temperatur des Verdampfergrenzwerts, eine Entlastung des Kompressor-Leistungsbedarfs erzeugt werden. Dies verringert den Spritverbrauch für das Betreiben des Kompressors und damit auch den Verbrauch des Fahrzeugs in diesen Betriebssituationen.

Gemäß bevorzugter Ausgestaltung der Erfindung ist vorgesehen, dass die Temperatur im Bereich des Verdampfers derart gesteuert ist, dass sie einen Verdampfergrenzwert insbesondere nicht übersteigt, wobei der Verdampfergrenzwert vorzugsweise in Abhängigkeit der Temperatur und der zuströmenden Luft bestimmt ist, insbesondere um ein bestimmtes Maß unterhalb dieser Temperatur liegt, beispielsweise vorzugsweise ca. um 3° C und insbesondere auf einen maximalen Verdampfergrenzwert im Bereich von 10°C bis 14°C, vorzugsweise von 12°C begrenzt ist. Die Vorgabe eines Verdampfergrenzwerts in Abhängigkeit der Temperatur der Luft stellt sicher, dass die Temperatur im Bereich des Verdampfers unterhalb des Taupunktes der zuströmenden Luft liegt und damit beim Durchströmen des Verdampfers ein Trocknen der Luft erreicht wird. Diese Maßnahme stellt insbesondere sicher, dass ein Beschlagen der Fahrzeugscheiben vermieden wird. Aus Gründen der Vermeidung von Geruchsbildung und Feuchtigkeitsstößen ist es vorgesehen, dass der maximale Verdampfergrenzwert im Bereich von 10°C bis 14°C liegt und insbesondere 12°C beträgt. Diese Vorgehensweise ermöglicht es, im Bereich des Verdampfers für den Benutzer günstige Betriebsbedingungen aufrecht zu erhalten. Die Temperatur im Bereich des Verdampfers wird dabei so geregelt, dass ein Verdampfertemperaturgrenzwert nicht überschritten wird, wobei die Regelung insbesondere vorsieht, dass die Verdampfertemperatur dem maximalen Verdampfergrenzwert entspricht. Die Regelung der Temperatur im Bereich des Verdampfers erfolgt gemäß bevorzugter Ausgestaltung dadurch, dass im Betrieb des Kältekreislaufes insbesondere die Leistung des Kompressors entsprechend gesteuert oder geregelt ist. Über den Kompressor wird dabei die Kälteleistung der Einrichtung gesteuert, was insbesondere über ein variables Hubvolumen des Kompressors erfolgt.

Gemäß weiterführender Ausgestaltung eines erfindungsgemäßen Verfahrens ist stromaufwärts des Verdampfers eine Klappe angeordnet, welche über einen Steller betätigbar ist, wobei erfindungsgemäß vorgesehen ist, dass durch die Stellung der Klappe der den Nebenstromkanal durchströmende Teilstrom der Luft bestimmt wird. Durch diese Maßnahme ist ein einfaches Aufteilen von dem Luftstrom in den Teilluftstrom und den Luftstrom durch den Verdampfer, den Verdampferstrom, möglich. Dadurch wird der Volumenstrom über den Verdampfer reduziert, so dass der Energieverbrauch durch den Kompressor möglichst gering gehalten wird. Gleichzeitig ist sichergestellt, dass die Temperatur im Bereich des Verdampfers den zulässigen Grenzwert nicht überschreitet. Die sich stromabwärts des Verdampfers ergebende Mischtemperatur aus Nebenluftstrom und Verdampferluftstrom ist dann eine Temperatur unterhalb der Außentemperatur der Luft. Die so vorkonditionierte Luft wird im Reheat-Verfahren am Heizungswärmetauscher ggf. weiter erwärmt, um die gewünschte Innenraumtemperatur einzustellen.

Die Erfindung bewirkt um so größere Energieeinsparungen, je größer die Außentemperatur ist, solange die Außentemperatur geringer ist als die Temperatur, die im Fahrzeuginnenraum zu erzeugen ist, so dass der Volumenstrom der zugeführten Luft nachfolgend noch durch den Heizungswärmetauscher erwärmt werden muss. In diesen Fällen kann es insbesondere vorgesehen sein, dass ein möglichst geringer bis gar kein Volumenstrom den Verdampfer durchströmt, so dass die Leistungsaufnahme am Klimakompressor möglichst gering bis hin zu Null ist. Gemäß weiterführender Ausgestaltung kann vorgesehen sein, dass die Steuerung des Volumenstroms durch den Nebenstromkanal in Abhängigkeit der Luftfeuchtigkeit der zuströmenden Luft bestimmt wird, wobei dies insbesondere auch dadurch erfolgen kann, dass der Verdampfergrenzwert in Abhängigkeit der Luftfeuchtigkeit bestimmt wird.

Gemäß weiterführender bevorzugter Ausgestaltung der Erfindung ist stromabwärts des Verdampfers ein Temperatursensor angeordnet, wodurch die Temperatur, welche durch Zusammenführen des Teilstroms und des Verdampferstroms erzeugt wird, erfasst wird und damit regelbar ist. Eine Regelung erfolgt dabei insbesondere im Hinblick auf das Erzeugen einer Zieltemperatur an dem Temperatursensor stromabwärts des Verdampfers. Durch diese Maßnahme wird es möglich, eine zu erzeugende Zieltemperatur für den Luftstrom stromaufwärts des Heizungswärmetauschers zu bestimmen, und diese Maßnahme ermöglicht dann in Abhängigkeit dieser Temperatur eine sehr genaue Steuerung des Volumenstroms über den Verdampfer. Die Vorgabe der Zieltemperatur kann dabei insbesondere vorsehen, dass im Falle einer luftseitig geregelten Heizung die Durchströmung des Heizungswärmetauschers einen möglichst geringen Volumenstrom aufweist. Es wird also das Wiederaufwärmen des Volumenstroms stromabwärts des Verdampfers möglichst weitgehend reduziert, wobei für die Regelung des Teilstroms durch den Nebenstromkanal ein von der Regelung und Steuerung des Luftstroms durch den Heizungswärmetauscher getrennter Regelkreis ausgebildet ist, wobei diese natürlich miteinander über die Temperaturvorgabe der Zieltemperatur gekoppelt sind.

Im Übrigen ist die Erfindung nachfolgend anhand des in der Zeichnung dargestellten Ausführungsbeispiels näher erläutert; dabei zeigt:
- Figur 1: in schematischer Darstellung eine erfindungsgemäße Klimatisierungseinrichtung für Fahrzeuge; und
- Figur 2: in schematischer Blockdarstellung die Regelkreise des erfindungsgemäßen Verfahrens.

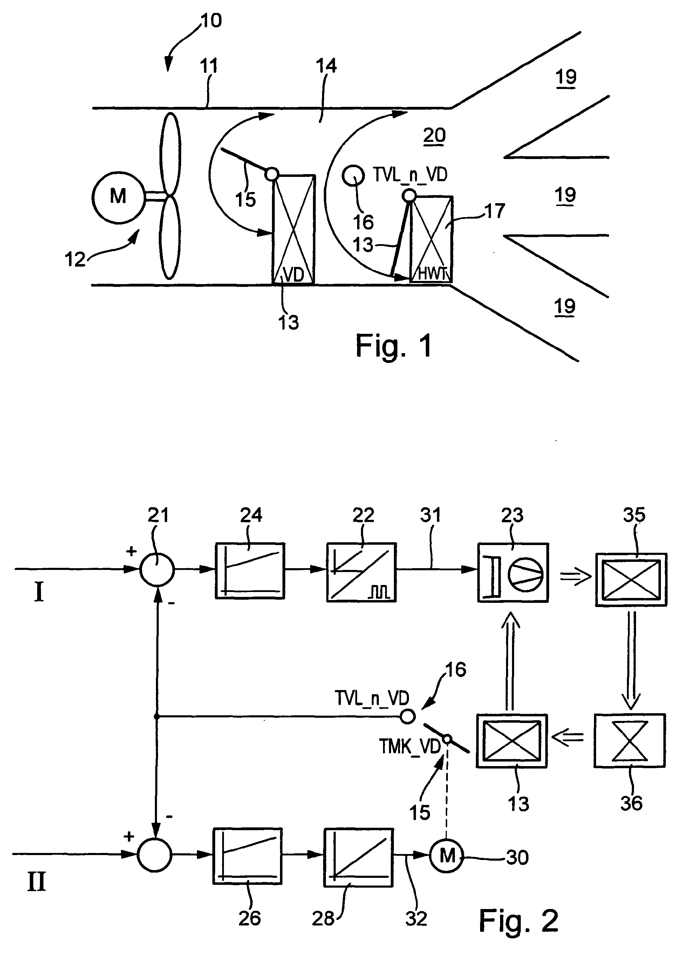

Die Figur 1 zeigt in schematischer Darstellung den Aufbau einer erfindungsgemäßen Klimatisierungseinrichtung für Fahrzeuge. Die Klimatisierungseinrichtung 10 wird durch einen Zufuhrkanal 11 gebildet, in welchem ein Gebläse 12 zum Erzeugen eines Volumenstroms von Luft angeordnet ist. Stromabwärts des Gebläses ist der Verdampfer 13 angeordnet. An dem Verdampfer 13 vorbeiführend ist der Nebenstromkanal 14 ausgebildet. Zum Steuern des Teilstroms, welcher den Nebenstromkanal 14 durchströmt ist die Klappe 15 angeordnet, welche so verschwenkbar ist, dass sie den Nebenstromkanal 14 vollständig abschließen kann und in einer anderen Endlage zumindest einen Teil des Verdampfers 13 abdeckt, so dass dieser ganz oder teilweise nicht vom Luftstrom durchströmbar ist. Es ist eine Frage der Gestaltung der Klappe und des Zufuhrkanals, ob die Durchströmung des Verdampfers 13 vollkommen durch die Klappe 15 absperrbar ist oder nicht. In der schematischen Darstellung ist eine Ausgestaltung der Klappe 15 gezeigt, die lediglich einen Teil des Verdampfers 13 abdeckt, so dass immer zumindest ein Reststrom der Luft stets den Verdampfer 13 durchströmt. Stromabwärts des Verdampfers 13 mündet der Nebenstromkanal in einen gemeinsamen Kanalabschnitt, in dem sich eine Mischtemperatur aus den beiden Teilströmen einstellt, welche durch den Temperatursensor 16 erfasst wird. Weiter stromabwärts ist der Heizungswärmetauscher 17 angeordnet, wobei eine weitere Temperaturmischklappe 18 einer luftseitiggeregelten Heizung den Luftstrom in einen den Heizungswärmetauscher 17 durchströmenden Teilstrom und einen Bypassstrom aufteilt, wobei sich diese beiden Teilströme stromabwärts des Heizungswärmetauschers 17 wieder vermischen und so eine Mischtemperatur erzeugen. Von dort an führen unterschiedliche Strömungskanäle 19 zu in den Fahrzeuginnenraum mündenden Austrittsdüsen in unterschiedlichen Fahrzeugbereichen, wobei diese Strömungskanäle 19 insbesondere so gestaltet sein können, dass sie voneinander verschiedene Temperaturen der Luft aufweisen, so dass einer dieser Strömungskanäle 19 insbesondere überwiegend aus Luft gespeist wird, welche den Heizungswärmetauscher 17 passiert hat, während ein anderer Kanal überwiegend aus Luft gespeist wird, welche den Bypass 20 neben dem Heizungswärmetauscher durchströmt hat. So kann in an sich bekannter und üblicher Weise eine Temperaturschichtung im Fahrzeuginnenraum ausgebildet werden.

Die Figur 2 zeigt in Blockdarstellung die Funktionsweise eines erfindungsgemäßen Verfahrens. Erfolgt aufgrund der zu erzeugenden Innenraumtemperatur eine Sollwertvergabe für den Verdampfer, die im Bereich zwischen 2°C und 12°C liegt, so wird das Vorgabesignal in den Zweig I bei 21 eingespeist. Die Temperatur stromabwärts des Verdampfers 13 wird über den Temperatursensor 16 erfasst und mit dem Verdampfersollwert verglichen. Die Differenz zwischen Verdampfertemperatur-Sollwert und Istwert wird in bekannter Weise dem Verdampfertemperatur-Regler 24 zugeführt, dessen Stellgröße wird über eine Kennlinie 22 in ein pulsweitenmoduliertes Stellsignal 31 umgesetzt und dem Regelventil eines Kompressors 23 zugeführt, der dadurch mittels variablem Hubvolumen in seiner Leistung verändert wird.

Temperaturvorgaben von Sollwerten im Bereich von 2°C bis 12°C entsprechen Vorgaben, die ohne Weiteres realisierbar sind, da in diesem Temperaturbereich keine unangenehme Geruchsbelästigung und dergleichen auftritt und der Verdampfer 13 mit vollständig geschlossener Klappe 15 betrieben werden kann.

Erfolgt eine Temperaturvorgabe für den Sollwert der Verdampfertemperatur, die oberhalb von 12°C liegt, so wird der Zweig II der Regelung aktiviert. Der Temperatursollwert wird wiederum mit dem gemessenen Istwert (Temperatursensor 16) verglichen und die Regeldifferenz einem weiteren Regler 26, beispielsweise ausgebildet als PI-Regler, zugeführt. Die Stellgröße wird ggf. über eine Kennlinie 28 angepasst als Signal 32 und einem Stellmotor 30 zur Steuerung der Mischluftklappe 15 zugeführt. In diesem Fall wird im Zweig I der Verdampfertemperatur-Grenzwert (12°C) eingestellt. Dafür kann bei einem weiteren Ausführungsbeispiel auch ein 2. Temperatursensor verwendbar sein.

Der Kondensator 35 und das Expansionsventil 36 sind weiterhin im Kältekreislauf des Systems der Klimaanlage angeordnet.

## Patentansprüche

1. Klimatisierungseinrichtung für Fahrzeuge, mit einem Zufuhrkanal (11) für Luft, der von einem Gebläse (12) zu einem Verdampfer (13) führt, wobei stromabwärts des Verdampfers (13) ein Heizungswärmetauscher (17) angeordnet ist, **dadurch gekennzeichnet, dass** ein am Verdampfer (13) vorbeiführender Nebenstromkanal (14) ausgebildet ist.

2. Klimatisierungseinrichtung nach Anspruch 1, **dadurch gekennzeichnet, dass** der Nebenstromkanal (14) derart schaltbar ausgebildet ist, dass ein sich ausbildender Teilstrom durch den Nebenstromkanal (14) bestimmbar ist.

3. Klimatisierungseinrichtung nach Anspruch 2, **dadurch gekennzeichnet, dass** zum Bestimmen des Teilstroms durch den Nebenstromkanal (14) eine Klappe (15) vorgesehen ist, welche insbesondere durch einen von einer Steuereinrichtung (25) ansteuerbaren Stellantrieb (30) verstellbar ist.

4. Klimatisierungseinrichtung nach Anspruch 3, **dadurch gekennzeichnet, dass** die Klappe (15) geeignet ist, den Nebenstromkanal (14) vollständig abzuschließen.

5. Klimatisierungseinrichtung nach Anspruch 2 oder 3, **dadurch gekennzeichnet, dass** die Klappe (15) geeignet ist die Durchströmung des Verdampfers (13) zumindest teilweise, insbesondere vollständig zu verhindern.

6. Klimatisierungseinrichtung nach einem der vorangegangenen Ansprüche, **dadurch gekennzeichnet, dass** der Nebenstromkanal (14) stromaufwärts des Heizungswärmetauschers (17) endet.

7. Klimatisierungseinrichtung nach Anspruch 6, **dadurch gekennzeichnet, dass** ein Temperatursensor (16) zum Erfassen der Temperatur stromabwärts des Nebenstromkanals (14) aber stromaufwärts des Heizungswärmetauschers (17) ausgebildet ist.

8. Klimatisierungseinrichtung nach einem der vorangegangenen Ansprüche, **dadurch gekennzeichnet, dass** stromabwärts des Verdampfers (13) ein Temperatursensor (16) zum Erfassen der Temperatur angeordnet ist.

9. Verfahren zum Steuern des Betriebs eine Klimatisierungseinrichtung, wobei ein Verdampfer (13) vorgesehen ist, wobei die Temperatur im Bereich des Verdampfers (13) derart geregelt ist, dass ein maximaler Verdampfergrenzwert nicht überschritten wird, **dadurch gekennzeichnet, dass** ein Nebenstromkanal (14) am Verdampfer (13) vorbeiführt, wobei der Teilstrom durch den Nebenstromkanal (14) derart gesteuert ist, dass die Temperatur stromabwärts des Verdampfers (13) einen Wert oberhalb des Verdampfergrenzwertes einnimmt.

10. Verfahren nach Anspruch 9, **dadurch gekennzeichnet, dass** der Verdampfergrenzwert unterhalb des Taupunktes liegt und insbesondere ein maximaler Verdampfergrenzwert im Bereich von 10° bis 14° Grad liegt, vorzugsweise höchstens 12° Celsius beträgt.

11. Verfahren nach einem der Ansprüche 9 oder 10, **dadurch gekennzeichnet, dass** die Temperatur im Bereich des Verdampfers (13) durch Steuern des Kältekreislaufs geregelt ist, wobei insbesondere die Leistung des Kompressors (23) gesteuert ist.

12. Verfahren nach einem der Ansprüche 9 bis 11, dass ein Steller (30) zum Bestimmen der Lage einer Klappe (15) angesteuert wird, wobei mittels der Klappe (15) der den Nebenstromkanal (14) durchströmende Teilstrom bestimmt wird.

13. Verfahren nach einem der Ansprüche 9 bis 12, **dadurch gekennzeichnet, dass** der Volumenstrom durch den Verdampfer (13) einen Grenzwert nicht unterschreitet.

14. Verfahren nach einem der Ansprüche 9 bis 13, **dadurch gekennzeichnet, dass** der Volumenstrom durch den Nebenstromkanal in Abhängigkeit der Luftfeuchtigkeit bestimmt ist.

15. Verfahren nach einem der Ansprüche 9 bis 14, **dadurch gekennzeichnet, dass** der Teilstrom durch den Nebenstromkanal (14) im Sinne des Erzeugens eines Zielwertes für die Temperatur stromabwärts des Verdampfers (13) erfolgt, wobei die Zieltemperatur vorzugsweise über einen stromabwärts des Verdampfers (13) angeordneten Sensor erfasst wird.
